Europäisches Patentamt

European Patent Office

Office européen des brevets

(11) Veröffentlichungsnummer: **0 000 565**
**B1**

(12) **EUROPÄISCHE PATENTSCHRIFT**

(45) Veröffentlichungstag der Patentschrift: 29.04.81

(21) Anmeldenummer: 78100470.0

(22) Anmeldetag: 21.07.78

(51) Int. Cl.³: **C 08 L 33/26, B 01 J 13/02**

�={}

(54) Wässrige Copolymerisatlösungen, Verfahren zu deren Herstellung und deren Verwendung als Hüllenbildner für die Herstellung von Microkapseln durch Komplexkoazervation.

(30) Priorität: 30.07.77 DE 2734577

(43) Veröffentlichungstag der Anmeldung:
07.02.79 Patentblatt 79/3

(45) Bekanntmachung des Hinweises auf die Patenterteilung:
29.04.81 Patentblatt 81/17

(84) Benannte Vertragsstaaten:
BE CH DE FR GB NL SE

(56) Entgegenhaltungen:
DE - A - 1 900 865

(73) Patentinhaber: BAYER AG
Zentralbereich Patente, Marken und Lizenzen
D-5090 Leverkusen 1, Bayerwerk (DE)

(72) Erfinder: Bömer, Bruno, Dr.
Gustav-Freitag-Strasse 2
D-5090 Leverkusen (DE)
Erfinder: Schnöring, Hildegard, Dr.
Rappenweg 8
D-5600 Wuppertal 11 (DE)
Erfinder: Schmidt, Rolf
An der Joch 6
D-5000 Köln 80 (DE)

Courier Press, Leamington Spa, England.

**0 000 565**

Wässrige Copolymerisatlösungen, Verfahren zu deren Herstellung und deren Verwendung als Hüllenbildner für die Herstellung von Microkapseln durch Komplexkoazervation

Gegenstand der Erfindung sind wäßrige Copolymerisatlösungen, Verfahren zu deren Herstellung und deren Verwendung als Hüllenbildner für die Herstellung von Mikrokapseln durch Komplexcoazervation. Die erfindungsgemäßen wäßrigen Polymerlösungen sind solche deren Polymeranteil 5 bis 30 Gew.-% beträgt und besteht aus einem Gemisch aus (A) einem Copolymerisat mit einer Grenzviskositätszahl $[\eta]$ von 0,05 bis 1 (dl/g) dessen statistisch verteilte Struktureinheiten zu 65 bis 90 Mol-% aus Resten des Acrylamids und zu 10 bis 35 Mol-% aus Resten von Maleinsäure oder Maleinsäureanhydrid bestehen und (B) einem entsprechenden hydrolysierten Copolymerisat mit einer Grenzviskositätszahl $[\eta]$ von 0,05 bis 1,5 (dl/g) dessen statistisch verteilte Struktureinheiten dementsprechend aus Resten des Acrylamids der Acrylsäure und der Maleinsäure bestehen, wobei die Maleinsäurereste zumindest teilweise in Salzform vorliegen, und das dadurch gekennzeichnet ist, daß Gewichtsverhältnis der Copolymerisate (A) und (B) 1:2 bis 20:1 ist.

Die Copolymerisate (A) können durch radikalische Copolymerisation von 65—90 Mol-% Acrylamid und 10—35 Mol-% Maleinsäureanhydrid oder Maleinsäure erhalten werden.

Die Copolymerisation von Acrylamid und Maleinsäureanhydrid wird zweckmäßigerweise als Fällungspolymerisation in organischen, gegen Anhydridgruppen inerten Lösungsmitteln durchgeführt. Besonders günstige Lösungsmittel sind wegen ihres guten Lösevermögens für die Monomeren und nicht zuletzt wegen ihrer leichten Flüchtigkeit Aceton und Essigsäureester von Alkoholen mit 1—3 Kohlenstoffatomen. Die Polymerisation kann mit den üblichen radikalischen Initiatoren wie aliphatischen Azoverbindungen oder organischen Perverbindungen wie Peroxiden oder Perestern ausgelöst werden. Die Polymerisationstemperatur wird durch die Zerfallseigenschaften des Initiators bestimmt und liegt bei Verwendung von Azoisobuttersäuredinitril in Batch-Ansätzen bei 50°—80°C. Die Copolymeren fallen bei diesem Verfahren als feinteilige Pulver an und können leicht abfiltriert und durch Waschen von Restmonomeren befreit werden.

Die Copolymerisation von Acrylamid und Maleinsäure zu Copolymerisaten (A) kann sowohl als Fällungspolymerisation in organischen Lösungsmitteln als auch also Lösungspolymerisation in Wasser durchgeführt werden.

Bei der Fällungscopolymerisation von Acrylamid und Maleinsäure können außer Aceton und Essigsäureestern von Alkoholen mit 1—3 Kohlenstoffatomen auch niedere aliphatische Alkohole mit 1—4 Kohlenstoffatomen mit Erfolg verwendet werden. Die Polymerisation sowie die Isolierung der Polymerisatpulver erfolgt analog wie bei Acrylamid-Maleinsäureanhydrid-Copolymeren.

Die Fällungscopolymerisate können lösungsmittelfeucht oder nach dem Trocknen in Wasser zu 5—30 Gew.-%igen Lösungen aufgelöst werden. Die Anhydridgruppen der Acrylamid-Maleinsäureanhydrid-Copolymeren gehen dabei in Maleinsäuregruppen über. Bei Verwendung der lösungsmittelfeuchten Polymerisate wird anschließend das organische Lösungsmittel durch Dekantieren und/oder Destillation abgetrennt.

Eine weitere bevorzugte Verfahrensweise zur Herstellung wäßriger Lösungen der Copolymerisate (A) stellt die Lösungscopolymerisation von Acrylamid und Maleinsäure in Wasser dar. Die Maleinsäure kann entweder durch Auflösen der entsprechenden Menge des Andydrids in Wasser vor der Polymerisation hergestellt oder als solche eingesetzt werden. Als Initiatoren eignen sich wasserlösliche Perverbindungen wie Persulfate oder Wasserstoffperoxid, gegebenenfalls in Kombination mit einem Reduktionsmittel und/oder Schwermetallsalz. Azoverbindungen mit hinreichender Wasserlöslichkeit sind ebenfalls geeignete Initiatoren. Azoisobuttersäuredinitril besitzt besonders bei erhöhter Temperatur eine hinreichende Wasserlöslichkeit und wird besonders bevorzugt, da es den Salzgehalt der Lösungen nicht beeinflußt.

Die Lösungspolymerisation kann wie die Fällungspolymerisation batchweise mit Vorlage des gesamten Ansatzes oder nach einem Semi-Batch-Zulaufverfahren mit Zudosierung der Monomeren durchgeführt werden. Das bevorzugte Verfahren der Lösungspolymerisation besteht darin, daß die wäßrige Lösung der Monomeren, die den Initiator gelöst oder feinteilig suspendiert enthält, bei etwa 80°—120°C unter Sauerstoffausschluß zu einer gerührten Vorlage sauerstoffreien Wassers in etwa 1—10 Std. zugegeben wird. Das Azoisobuttersäuredinitril kann auch als Lösung in einem organischen Lösungsmittel synchron zur Monomerlösung zugetropft werden, wobei das Lösungsmittel gegebenenfalls kontinuierlich abdestilliert werden kann. Nach beendeter Monomerzugabe wird 15—120 Min. nachgerührt, und die Lösung anschließend auf Raumtemperatur abgekühlt.

Die durch Lösungspolymerisation erhaltenen Lösungen der Copolymeren (A) enthalten noch geringe Mengen an Restmonomeren, die sich jedoch im allgemeinen nicht nachteilig auf die Anwendungseigenschaften der Lösungen auswirken. Außerdem enthalten in wäßriger Lösung hergestellte Copolymere (A) bereits geringe Mengen durch Hydrolyse während der Polymerisation entstandene Acrylsäure- und Maleinsäuresalzbausteine.

Erfindungsgemäße Copolymerisate (A) werden erhalten durch Copolymerisation von 65—90 Mol-% Acrylamid und 10—35 Mol-% Maleinsäure bzw. Maleinsäureanhydrid. Vorzugsweise werden Copolymerisate (A) aus 70—85 Mol-% Acrylamid und 15—30 Mol-% Maleinsäure bzw. Maleinsäureanhydrid verwendet. Die Copolymerisate (A) enthalten die Struktureinheiten aus Acrylamid und

2

# 0 000 565

Maleinsäureanhydrid in statistischer Verteilung und in Mengenverhältnissen, die den Zusammensetzungen der Monomermischungen entsprechen.

Die radikalischen Initiatoren werden in Mengen von 0,1—10 Gew.-%, bevorzugt 0,3—3,0 Gew.-%, bezogen auf Monomere zugesetzt. Bei Fällungspolymerisationen liegen die Polymerisatausbeuten im allgemeinen bei 75—95 %. Die Copolymeren (A) besitzen Grenzviskositätszahlen $[\eta]$ von 0,05—1,0 [dl/g], vorzugsweise 0,08 bis 0,4 [dl/g] (bestimmt in 0,9%iger wäßriger Kochsalzlösung).

Die Lösungen der Copolymerisate (B)) können erhalten werden, indem man die wäßrigen Lösungen der Copolymerisate (A) längere Zeit auf Temperaturen von 60°—150°C, vorzugsweise 80—130°C — gegebenenfalls unter Druck in einem Autoklaven — erhitzt. Besonders bevorzugt ist eine Hydrolyse unter Rückflußbedingungen bei Normaldruck. Während des Erhitzens tritt eine teilweise Hydrolyse von Acrylamidbausteinen ein. Das dabei entstehende Ammoniak neutralisiert einen Teil der Maleinsäurebausteine und bewirkt dadurch einen Anstieg des pH-Wertes der Lösung. Infolge der Hydrolyse geht das Acrylamid-Maleinsäure-Copolymerisat in ein Copolymerisat über, welches aus Acrylamid-Acrylsäure- und Maleinsäurebausteinen besteht, und in dem die Maleinsäurebausteine zumindest teilweise in Salzform vorliegen.

Hydrolysiert man wäßrige Copolymerisatlösungen (A), die aus gründlich gewaschenen Fällungspolymerisaten hergestellt wurden, so ändert sich die Viskosität der Lösung im Verlauf der Hydrolyse nicht merklich, es tritt also weder ein Abbau des Polymeren noch eine Nachpolymerisation ein.

Beim Erhitzen von durch Lösungspolymerisation in Wasser hergestellten Copolymerisatlösungen (A) kann die Lösungsviskosität durch Nachpolymerisation der Restmonomeren mehr oder weniger stark ansteigen. Dieser Anstieg führt jedoch zu keiner signifikanten Änderung des Koazervierungsverhaltens der Polymeren.

Erfindungsgemäße Lösungen von Copolymerisaten (B) werden erhalten, indem erfindungsgemäße Lösungen der Copolymerisate (A) auf 60°—150°C, vorzugsweise 80°—130°C und besonders bevorzugt auf etwa 100°C (Rückfluß unter Normaldruck) erhitzt werden, bis der pH der Lösungen auf 3,8 bis 4,9, vorzugsweise 4,0 bis 4,6, gestiegen ist. Infolge einer eventuellen Nachpolymerisation von Restmonomeren liegen die in 0,9%iger wäßriger Kochsalzlösung bestimmten Grenzviskositätszahlen $[\eta]$ der Copolymerisate (B) bei 0,05 bis 1,5 [dl/g], vorzugsweise bei 0,08 bis 1,0 [dl/g].

Die Lösungen der Copolymerisate (A) und die Lösungen der Copolymerisate (B) bilden — gegebenenfalls nach einer pH-Einstellung mit Ammoniak oder Alkalilauge bzw. mit Essigsäure — auch für sich alleine mit Gelatine Koazervate. Dies Koazervate bilden jedoch keine Hülle oder keine geschlossene Hülle und/oder sind sehr klebrig.

Mischt man die wäßrigen Lösungen der erfindungsgemäßen Copolymerisate (A) und (B) im Gewichtsverhältnis der gelösten Copolymerisate (A):(B) wie 1:2 bis 20:1, so erhält man überraschenderweise Polymerlösungen, die zusammen mit Gelatine Koazervate liefern, die gleichmäßige, geschlossene Hüllen bilden und daher zur Herstellung von Mikrokapseln vorzüglich geeignet sind. Das optimale Mischungsverhältnis wird hauptsächlich durch die Zusammensetzung des Copolymeren (A) sowie durch den pH-Wert der Lösung des Copolymeren (B), der ein Maß für den HYdrolysegrad darstellt, beeinflußt und muß für jedes Copolymerenpaar experimentell bestimmt werden. Selbstverständlich können auch Lösungen von Copolymeren (A) mit Lösung von Copolymeren (B) abgemischt werden, die aus Copolymeren (A') mit anderer Zusammensetzung durch Hydrolyse erhalten wurden (z.B. Copolymer (A) mit 70 Mol-% Acrylamid- und 30 Mol-% Maleinsäurebausteinen, und Copolymerlösung (B) aus Copolymer (A') mit 80 Mol-% Acrylamid- und 20 Mol-% Maleinsäurebausteinen). In manchen Fällen kann eine Veränderung des pH-Wertes der Polymerlösung durch Zugabe von Ammoniak oder Alkalihydroxid bzw. Essigsäure das Koazervierungsverhalten günstig beeinflussen.

Das Verfahren der Mikroverkapselung durch Komplexkoazervierung ist grundsätzlich bekannt. Es beruht darauf, daß man den ein zukapselnden Stoff in feinverteilter Form in einer wäßrigen, zur Koazervatbildung geeigneten Lösung dispergiert, und dann die Koazervierung auslöst. Dies geschieht durch Verdünnen, Änderung des pH-Wertes oder Abkühlen oder durch eine Kombination dieser Maßnahmen, je nach dem benutzten System.

Die wäßrigen Polymerlösungen der Erfindung bilden mit Gelatine Komplexkoazervate durch Verdünnen und/oder Abkühlen. Sie lassen sich z.B. in 10—15 gew.-%iger wäßriger Lösung mit einer 10—15 gew.-%igen Gelatinelösung mischen und durch Verdünnen und Abkühlen koazervieren. Es ist erstaunlich, daß derartig hochkonzentrierte Lösungen benutzt werden können. Ebenfalls überraschend ist, daß die erhaltenen Koazervate, die ja eine separate weiche Gelphase darstellen, bereits 20—30 Gew.-% Feststoff enthalten. Dieser hohe Feststoffgehalt erleichtert es sehr, die Koazervate zu Pulvern zu trocknen. Da die Koazervate außerordentlich leicht zusammenhängende Hüllen oder Überzüge bilden, eignen sie sich vorzüglich zur Herstellung von Mikrokapseln. Bei der Koazervierung bildet sich die separate Gelphase als zusammenhängende Schicht auf kleinen, in der Lösung dispergierten flüssigen oder festen separaten Teilchen aus und hüllt diese Teilchen ein.

Mit der Kombination aus erfindungsgemäßen Polymerlösungen und Gelatine können eine Vielzahl von in Wasser schwer- oder unlöslichen flüssigen oder festen dispergierbaren und gegen Wasser hinreichend beständigen Stoffen mikroverkapselt werden.

Beispielhaft seien gennant: Organische Lösungsmittel, Paraffinöle, Parfumöle, Silikonentschäumer,

3

Phosphorsäureester, flüssige Kristalle und Farbpigmente, sowie Pharmazeutika und Pflanzenschutzmittel.

Beispiel 1

a) Polymerisation: (Copolymerisat (A))
240 g Acrylamid, 60 g Maleinsäureanhydrid und 3 g Azoisobuttersäuredinitril werden in 2,7 l Essigsäureäthylester gelöst. Die Lösung wird durch mehrmaliges Evakuieren der Apparatur und Füllen mit Stickstoff von Sauerstoff befreit und unter Sauerstoffausschluß 20 Std. bei 60°C gerührt. Das ausgefallene Polymerisat wird abfiltriert, gründlich mit Essigsäureäthylester gewaschen und im Vakuum bei 60°C getrocknet. Man erhält 273 g eines feinpulverigen Polymeren mit einer in 0,9 %iger wäßriger NaCl-Lösung bestimmten Viskositätszahl (intrinsic viscosity) $[\eta] = 0,14$ [dl/g].

b) Hydrolyse: (Copolymerisat (B))
100 g des trockenen Polymeren gem. 1a) werden in 900 ml entmineralisiertem Wasser gelöst, und die Lösung bis zum pH-Wert 4,6 bei Normaldruck unter Rückfluß erhitzt (ca. 12—18 Std.). Sofort nach dem Auflösen sowie bei Erreichen der pH-Werte 3,0; 3,5; 4,1 und 4,6 wird die Lösungsviskosität mit einem Kugelfallviskosimeter bestimmt. Alle Lösungen zeigen innerhalb der Fehlergrenze die gleiche Viskosität.

c) Herstellung der Polymerlösung und Verkapselung
150 g trockenes Polymerisat gemäß 1a) werden in 1.350 ml entmineralisiertem Wasser gelöst. Die Lösung zeigt einen pH-Wert von ~2,2. 150 ml dieser Lösung werden mit 50 ml der hydrolysierten Lösung gemäß 1b) gemischt. Die Mischung besitzt einen pH-Wert von 3,5. Zu 50 g der so erhaltenen 10 gew.-%igen Lösung des Copolymerisatgemisches werden bei 50°C 50 g einer 10 gew.-%igen wäßrigen Lösung einer sauer geäscherten Schweinehautgelatine mit einem pH von 5,6 gegeben. 40 g Wärmeübertragungsöl ("Marlotherm[(R)]"; Chem. Werke Hüls) werden zugegeben und bei 50°C mit einem schnellaufenden Rührer zu Tröpfchen mit ca. 25μm: Durchmesser verteilt. Nach Zugabe von 125 g entmineralisiertem Wasser wird die Dispersion unter Rühren auf +10 bis +5°C abgekühlt. Dabei überziehen sich die Öltröpfchen mit einer geschlossenen, gleichmäßig dicken Koazervathülle.

Beispiele 2—9

Polymerlösungen gemäß Beispiel 1 a) und 1 b) werden in den in der Tabelle angegebenen Verhältnissen abgemischt. Die Mischungen werden nach der in Beispiel 1 c) angegebenen Methode gepüft. Das Einkapselungsverhalten wird als "gut" bezeichnet, wenn die Öltröpfchen von einer geschlossenen, regelmäßig geformtern und gleichmäßig dicken Hülle umgeben sind. Als "mittel" wird eine geschlossene, unregelmäßig geformte und ungleichmäßig dicke Hülle bezeichnet. Ein "schlechtes" Einkapselungsverhalten liegt dann vor, wenn die Hülle nicht geschlossen und zusammenhängend ist, die Kapseln sehr stark kleben order gar keine Hülle gebildet wird.

TABELLE

| Beispiel Nr. | Lösung gem. Beispiel 1 b) [g] | Lösung gem. Beispiel 1 a) [g] | Mischungs-pH | Einkapselungsverhalten |
|---|---|---|---|---|
| 2 | 100 | 0 | 4,6 | schlecht |
| 3 | 150 | 75 | 4,35 | schlecht |
| 4 | 100 | 100 | 4,1 | mittel |
| 5 | 75 | 150 | 3,7 | gut |
| 6 | 50 | 200 | 3,4 | gut |
| 7 | 20 | 180 | 3,0 | gut |
| 8 | 10 | 190 | 2,5 | mittel |
| 9 | 0 | 200 | 2,2 | schlecht |

Beispiele 10—39

330 g Acrylamid und 170 g Maleinsäure werden in 3,500 ml entmineralisiertem Wasser bei Raumtemperatur gelöst. Nach Zugabe von 4 g feinpulverigem Azoisobuttersäuredinitril wird 90 Min.

intensiv bei 20—25°C gerührt und dann vom ungelösten Initiator abfiltriert. Die so erhaltene Lösung wird in 2 Stunden gleichmäßig zu einer Vorlage von 1 l sauerstoffreiem, siedenden Wasser getropft. Nach einstündigem Nachrühren unter Rückfluß wird die Polymerlösung abgekühlt. Sie besitzt einen pH-Wert von 3,0 und eine Viskositätszahl (intrinsic viscosity) $[\eta]$ von 0,22 [dl/g] in 0,9%iger wäßriger Kochsalzlösung.

2 kg Polymerlösung werden erneut zum Sieden erhitzt. Sobald der pH-Wert auf 3,8; 4,0; 4,2; 4,4; 4,6 und 4,9 gestiegen ist, werden jeweils 250 ml Lösung entnommen und mit nicht erhitzter Lösung gemischt.

### TABELLE

| Beispiel Nr. | nacherhitzte Lösung pH / [g] | Ausgangs- lösung [g] | Mischungs- pH | Einkap- selungs- verhalten |
|:---:|:---:|:---:|:---:|:---:|
| 10 | 3,8 / 50 | — | 3,8 | schlecht |
| 11 | 3,8 / 50 | 50 | 3,6 | schlecht |
| 12 | 3,8 / 50 | 100 | 3,4 | mittel |
| 13 | 3,8 / 25 | 100 | 3,2 | schlecht |
| 14 | 4,0 / 50 | — | 4,0 | schlecht |
| 15 | 4,0 / 50 | 50 | 3,8 | mittel |
| 16 | 4,0 / 50 | 100 | 3,6 | mittel |
| 17 | 4,0 / 25 | 100 | 3,4 | mittel |
| 18 | 4,2 / 50 | — | 4,2 | schlecht |
| 19 | 4,2 / 50 | 25 | 4,1 | mittel |
| 20 | 4,2 / 50 | 50 | 4,0 | mittel |
| 21 | 4,2 / 25 | 100 | 3,6 | mittel |
| 22 | 4,4 / 50 | — | 4,4 | schlecht |
| 23 | 4,4 / 50 | 25 | 3,6 | mittel |
| 24 | 4,4 / 50 | 50 | 4,1 | gut |
| 25 | 4,4 / 50 | 100 | 3,9 | gut |
| 26 | 4,4 / 10 | 90 | 3,4 | gut |
| 27 | 4,6 / 50 | — | 4,6 | schlecht |
| 28 | 4,6 / 50 | 25 | 3,6 | schlecht |
| 29 | 4,6 / 50 | 50 | 3,6 | mittel |
| 30 | 4,6 / 25 | 50 | 4,0 | gut |
| 31 | 4,6 / 25 | 100 | 3,5 | gut |
| 32 | 4,6 / 10 | 90 | 3,4 | gut |
| 33 | 4,9 / 50 | 25 | 4,6 | schlecht |
| 34 | 4,9 / 50 | 50 | 4,3 | mittel |
| 35 | 4,9 / 25 | 50 | 4,0 | mittel |
| 36 | 4,9 / 20 | 80 | 3,8 | mittel |
| 37 | 4,9 / 10 | 90 | 3,3 | fast gut |
| 38 | — / — | 100 | 3,0 | schlecht |
| 39 | — / — | 100** | 3,6 | schlecht |

*) pH durch Zugabe von Eisessig eingestellt.
**) pH durch Zugabe von Ammoniak eingestellt.
Die Beispiele 10—14, 18 und 22, 27, 38, 39 sind Vergleichs beispiele.

**0 000 565**

Beispiele 40—49

In einem 2 l fassenden Mehrhalskolben mit Rührer, Rückflußkühler, Tropftrichter und Stickstoffleitung werden 300 ml entmineralisiertes Wasser vorgelegt. Die Apparatur wird 3mal auf ~30 mbar evakuiert und mit Stickstoff gefüllt. Dann erhitzt man das Wasser unter langsamem Überleiten von Stickstoff zum Sieden.

150 g Monomere in den in der Tabelle angegebenen Gewichts- bzw. Molverhältnissen werden in 1.050 g entmineralisiertem Wasser gelöst. Bei Verwendung von Maleinsäure erfolgt das Lösen bei Raumtemperatur. Verwendet man Maleinsäureanhydrid, so löst man dieses zweckmäßig zuerst unter Hydrolyse in 40—50°C warmem Wasser und fügt das Acrylamid nach dem Abkühlen auf Raumtemperatur zu. Dann wird 1,0 g feinpulveriges Azoisobuttersäuredinitril zugefügt, die Mischung 1 Std. bei Raumtemperatur gerührt und von ungelösten Anteilen abfiltriert. Die so erhaltene Monomerlösung wird in 3 Stunden gleichmäßig zu der siedenden Vorlage getropft. Nach einstündigem Nachrühren bei 100°C wird die Polymerlösung abgekühlt. 1.000 g Lösung werden bei Raumtemperatur aufbewahrt, und die restlichen Lösung so lange zum Sieden erhitzt, bis sie den in der Tabelle angegebenen pH besitzt. Zu Beginn wird der pH alle 2 Stunden ab pH≈4,0 stündlich kontrolliert.

Die abgemischten Lösungen werden nach der im Beispiel 1 c) beschriebenen Methode geprüft. Die Bewertung des Einkapselungsverhaltens erfolgt nach Beispiel 2.

| Beispiel Nr. | Acrylamid [Gew.%] [Mol %] | Maleinsaure-anhydrid [Gew.%] [Mol %] | Maleinsaure [Gew.%] [Mol %] | $[\eta]$ [dl/g] | pH frische Lsg. | Hydrolyse bis pH | Abmischung hydrol./frische Lsg.[g] Lsg.[g] | Mischungs-pH | Einkap-selungs-verhalten |
|---|---|---|---|---|---|---|---|---|---|
| 40 | 55 / 62,8 | 45 / 37,2 | — | 0,12 | 2,0 | 3,4 | 50 / 50 | 2,9 | schlecht |
| 41 | 60 / 67,4 | 40 / 32,6 | — | 0,09 | 2,2 | 3,8 | 50 / 50 | 3,1 | mittel |
| 42 | 61 / 71,9 | — | 39 / 28,1 | 0,22 | 2,45 | 4,0 | 50 / 50 | 3,3 | gut |
| 43 | 66 / 76,0 | — | 34 / 24,0 | 0,16 | 2,7 | 4,3 | 40 / 80 | 3,3 | gut |
| 44 | 75 / 80,5 | 25 / 19,5 | — | 0,23 | 3,0 | 4,5 | 30 / 90 | 3,5 | gut |
| 45 | 80 / 84,7 | 20 / 15,3 | — | 0,24 | 3,2 | 4,5 | 40 / 80 | 3.8 | gut |
| 46 | 77 / 84,5 | — | 23 / 15,5 | 0,20 | 3,3 | 4,6 | 30 / 90 | 3,8 | gut |
| 47 | 83 / 88,9 | — | 17 / 11,1 | 0,28 | 3,7 | 4,5 | 20 / 120 | 3,9 | mittel |
| 48 | 89 / 93,0 | — | 11 / 7,0 | 0,39 | 3,7 | 4,5 | 20 / 120 | 3,9 | schlecht |
| 49 | 95 / 96,3 | 5 / 3,7 | — | 0,60 | 3,9 | 4,9 | 20 / 120 | 4,0 | schlecht |

$[\eta]$ = Viskositätszahl (intrinsic viscosity) in 0,9%iger wäßriger Kochsalzlösung.

# 0 000 565

### Beispiele 50—53

In einem 1 Liter fassenden Mehrhalskolben mit Rührer, Rückflüßkühler, Tropftrichter und Stickstoffleitung werden je 200 ml siedendes sauerstoffreies Wasser vorgelegt. 50 g Acrylamid und 20 g Maleinsäure werden in 430 ml entmineralisiertem Wasser gelöst. Nach Zugabe der in der Tabelle angegebenen Menge Azoisobuttersäuredinitril wird die Monomer/Initiatormischung als Lösung (L) oder gut gerührte Suspension (S) innerhalb 2,5 Stunden gleichmäßig bei 100°C zugetropft. Nach einstündigem Nachrühren werden ~400 ml Lösung entnommen und bei Raumtemperatur aufbewahrt. Die restliche Lösung wird in 12—18 Stunden bei 100°C bis zum angegebenen pH-Wert hydrolysiert. Die Abmischungen werden nach dem in den Beispielen 1 und 2 angegebenen Verfahren geprüft.

9

| Beispiel Nr. | AIBN [g] | frische Lösung pH / [$\eta$] [dl/g] | hydrol. Losung pH / [$\eta$] [dl-g] | Abmischung hydrol. / frische Lsg. Lsg. [ml] / [ml] | Misch-pH | Einkapselung |
|---|---|---|---|---|---|---|
| 50 | 0,175 | 2,4 / 0,23 | 4,3 / 1,26 | 100 / 200 | 3,2 | gut |
| 51 | 0,350 | 2,7 / 0,21 | 4,5 / 0,81 | 100 / 300 | 3,3 | gut |
| 52 | 0,700 | 3,3 / 0,22 | 4,5 / 0,63 | 100 / 200 | 3,6 | gut |
| 53 | 1,050 | 3,4 / 0,21 | 4,6 / 0,42 | 100 / 200 | 3,7 | gut |

AIBN = Azoisobuttersäuredinitril.

[$\eta$] = Viskositätszahl (intrinsic viscosity) in 0,9%iger wäßriger Kochsalzlösung.

**0 000 565**

**Patentansprüche**

1. Wäßrige Copolymerisatlösung, deren Polymeranteil 5—30 Gew.-% beträgt und besteht aus einem Gemisch aus

A)   einem Copolymerisat mit einer Grenzviskositätszahl [η] von 0,05 bis 1 [dl/g] dessen statistisch verteilte Struktureinheiten zu
65 bis 90 Mol-% aus Resten des Acrylamids und zu
10 bis 35 Mol-% aus Resten von Maleinsäure oder Maleinsäureanhydrid bestehen, und

B)   einem entsprechenden hydrolysierten Copolymerisat mit einer Grenzviskositätszahl [η] von 0,05 bis 1,5 [dl/g] dessen statistisch verteilte Struktureinheit dementsprechend aus Resten des Acrylamids, der Acrylsäure und der Maleinsäure bestehen, wobei die Maleinsäurereste zumindest teilweise in Salzform vorliegen,

dadurch gekennzeichnet, daß das Gewichtsverhältnis der Copolymerisate A und B 1:2 bis 20:1 ist.

2. Verfahren zur Herstellung der wäßrigen Copolymerisatlösung gemäß Anspruch 1, dadurch gekennzeichnet, daß man

a)   zur Herstellung des Copolymerisats (A) die Monomeren in einem organischen Lösungsmittel oder in Wasser löst, mit radikalischen Iniatoren bei 50—120°C polymerisiert und gegebenenfalls das Polymerisat isoliert und in Wasser löst und

b)   zur Herstellung des Copolymerisats (B) einen Teil des Copolymerisats (A) durch Erhitzen seiner wäßrigen Lösung auf 60 bis 150°C so lange hydrolysiert, bis sich ein pH-Wert von 3,8 bis 4,9 eingestellt hat und dann

c)   beide Copolymerisatlösungen im Verhältnis von Copolymerisat (A) zu Copolymerisat (B) von 1:2 bis 20:1 vereinigt.

3. Verwendung der wäßrigen Copolymerisatlösung gemäß Anspruch 1 als Komponente zur Hüllenbildung bei der Herstellung von Mikrokapseln durch Komplexcoazervation.

**Claims**

1. An aqueous copolymer solution, the polymeric content of which amounts to 5 to 30% by weight and consists of a mixture of

A)   a copolymer with an intrinsic viscosity [η] of 0.05 to 1 [dl/g], 65 to 90 mole percent of whose statistically distributed structural units consist of residues of acrylamide and 10 to 35 mole percent of residues of maleic acid or maleic acid anhydride, and

B)   a corresponding hydrolysed copolymer having an intrinsic viscosity [η] of 0.05 to 1.5 [dl/g] whose statistically distributed structural units accordingly consist of residues of acrylamide, arylic acid and maleic acid, at least some of the maleic acid residues being present in salt form,

characterised in that the ratio by weight of copolymer A to copolymer B is from 1:2 to 20:1.

2. A process for producing the aqueous copolymer solution according to claim 1, characterised in that

a)   for producing copolymer (A) ther monomers are dissolved in an organic solvent or in water, polymerised with radical initiators at 50 to 120°C and the polymer is optionally isolated and dissolved in water and

b)   for producing the copolymer (B) a part of copolymer (A) is hydrolysed by heating its aqueous solution to 60 to 150°C until a pH value of from 3.8 to 4.9 is obtained and then

c)   both copolymer solutions are combined in a ratio of copolymer (A) to copolymer (B) of from 1:2 to 20:1.

3. The use of the aqueous copolymer solution according to claim 1 as shell-forming component in the production of microcapsules by complex coacervation.

**Revendications**

1. Solution aqueous de copolymères, dont la proportion de matière polymérique s'élève à 5—30 % en poids et qui est formée d'un mélange constitué par:

A)   un copolymère de viscosité intrinsèque [η] allant de 0,05 à 1 [dl/g], dont les motifs structuraux à répartition statistique sont formés, en proportion de 65 à 90 moles %, de restes d'acrylamide et, en proportion de 10 à 35 moles %, de restes d'acide maléique ou d'anhydrique d'acide maléique, et

B) un copolymère hydrolysé correspondant de viscosité intrinsèque [$\eta$] allant de 0,05 à 1,5 [dl/g] dont le motif structural à répartition statistique est formé, d'une manière correspondante, de restes d'acrylamide, d'acide acrylique et d'acide maléique, les restes d'acide maléique étant présents au moins en partie sous la forme de sel,

caractérisée en ce que le rapport en poids des copolymères A et B a une valeur de 1:2 à 20:1.

2. Procédé de production de la solution aqueuse de copolymères suivant la revendication 1, caractérisé en ce que:

a) pour la production du copolymère (A), on dissout les monomères dans un solvant organique ou dans l'eau, on les polymérise à 50—120°C avec des initiateurs radicalaires et le cas échéant, on isole le produit de polymérisation et on le dissout dans l'eau et

b) pour la production du copolymère (B), on hydrolyse une partie du copolymère (A) par chauffage de sa solution aqueuse à une température de 60 à 150°C jusqu'à ce que le pH ait atteint une valeur de 3,8 à 4,9, puis

c) on réunit les deux solutions de copolymères dans un rapport du copolymère (A) au copolymère (B) de 1:2 à 20:1.

3. Utilisation de la solution aqueuse de copolymères suivant la revendication 1 comme composant pour la formation d'enveloppes dans la production de microcapsules par coacervation complexe.